# EUROPÄISCHE PATENTSCHRIFT

(11) **EP 0 457 951 B1**
(45) Veröffentlichungstag und Bekanntmachung des Hinweises auf die Patenterteilung: **12.10.1994**
(21) Anmeldenummer: 90109937.4
(22) Anmeldetag: 25.05.1990
(51) Int. Cl.: B01D 17/028, B01D 17/032

(54) **Vorrichtung zur Durchflussabscheidung von Öl aus Wasser mit mäanderförmiger Strömung**
Device for the flow separation of oil from water with flow in meander form
Dispositif de séparation d'écoulement d'huile de l'eau avec un courant en méandres

(43) Veröffentlichungstag der Anmeldung: 27.11.1991
(73) Patentinhaber: OSSENKOP MASCHINENBAU, 31840 Hessisch Oldendorf (DE)
(72) Erfinder: Ossenkop, Wilhelm, D-3252 Hess. Oldendorf 3 (DE)
(74) Vertreter: Wehser, Wulf, Dipl.-Ing.

(56) Entgegenhaltungen:
- EP-A- 0 228 520
- DE-A- 2 837 554
- DE-A- 3 423 587
- DE-C- 550 989
- DE-U- 8 021 264
- DE-U- 8 600 285
- US-A- 1 116 903
- US-A- 1 645 093

## Beschreibung

Die Erfindung betrifft eine Vorrichtung zur Durchflußabscheidung von Öl aus Wasser gemäß dem Oberbegriff des Anspruchs 1.

Bei einer bekannten Vorrichtung dieser Art (US-A-11 16 903) reichen die von unten nach oben sich ertreckenden Zwischenwände nur über einen Teil des Flüssigkeitsniveaus, so daß das zu reinigende Wasser oberhalb der Oberkanten dieser Zwischenwände von der mäanderförmigen Strömung nicht erfaßt wird. Die Abscheidung geht daher nur in Form eines Absetzvorganges vor sich, so daß die Abscheidung vergleichsweise zeitaufwendig und unvollständig ist. Durch diese Vorrichtung ist es auch bekannt, eine Abdeckung für eine Überlauföffnung in verschiedenen Höhenlagen zu befestigen.

Bei einer weiteren bekannten Vorrichtung (DE-A-28 37 554) ist nur eine einzige Überlauföffnung vorgesehen, so daß die Abscheidungsmöglichkeiten stark eingeschränkt sind. Entsprechendes gilt für eine andere bekannte Vorrichtung (DE-C-550 989), bei welcher außerdem ein grosser seitlicher Versatz des Überlaufes zu den von oben und unten in das Wasser hineinragenden Zwischenwänden vorgesehen ist, so daß die Abscheidung in diesem Bereich teilweise wieder verloren geht.

Schließlich ist eine Vorrichtung bekannt (DE-U-86 00 285.6), bei welcher ebenfalls die Oberkanten der sich von unten erstreckenden Zwischenwände weit unterhalb des Flüssigkeitsspiegels liegen.

Ausgehend von diesem Stand der Technik liegt der Erfindung die Aufgabe zugrunde, eine Vorrichtung der eingangs genannten Art so auszugestalten, daß es mit ihr möglich ist, die vorzunehmenden Abscheidungen an den Grad der Verunreinigung und insoweit an die abzuscheidende Ölmenge kontinuierlich anzupassen.

Hierzu ist erfindungsgemäß vorgesehen, daß die Oberkanten der von unten nach oben in das Wasser hineinragenden Zwischenwände in einem Abstand von 20 mm oder weniger unterhalb der Unterkanten der Überlauföffnungen angeordnet sind, und daß die Verschiebung der Abdeckungen mittels eines mechanischen Antriebes erfolgt, durch welchen die Einstellage der Abdeckungen kontinuierlich veränderbar ist.

Mit dieser Anordnung wird erreicht, daß einerseits durch die zahlreichen Überlauföffnungen eine Abscheidung über den besagten Flüssigkeitsspiegel möglich ist, wobei eine feinstufige Anpassung durch die Regelung mittels der die Unterkanten der Überlauföffnungen bildenden Abdeckungen möglich wird. Außerdem wird die zu reinigende Flüssigkeit zwangsweise bis in den Bereich der Unterkanten der Überlauföffnungen geführt, wodurch die Übergabe von noch stärker verunreinigtem Wasser in den jeweils nächsten Behälterabschnitt stark eingeschränkt wird. Das stark verunreinigte Wasser wird nämlich zwangsweise über die Oberkanten der Zwischenwandungen geführt, um in die nächste Kammer gelangen zu können, was bei niveaugleicher Lage von der Unterkante der Überlauföffnungen und der Oberkante der Zwischenwand zu einem zusätzlichen Abschalteffekt führt.

Das gereinigte Wasser kann dann im unteren Bereich der letzten Kammer ausgefördert werden.

Da bei der erfindungsgemäßen Anordnung Filterelemente jeglicher Art fehlen, ist ein Zusetzen kleiner Strömungsquerschnitte nicht möglich. Insbesondere können die Überlauföffnungen so groß gehalten werden, daß ein Zusetzen oder ein Verschmutzen, das die Ausförderung des Öles beeinträchtigt, nicht vorkommen kann.

Das Rechteck hat eine Länge von 20 bis 30 cm und eine Höhe von etwa 2 bis 5 cm.

Die Unterkanten der Überlauföffnungen können mit einer gemeinsamen von unten gegen die Überlauföffnungen schiebbaren Abdeckungen versehen sein. Es können aber auch den einzelnen Überlauföffnungen jeweils gesonderte und gesondert einstellbare Abdeckungen zugeordnet sein.

Mit einer solchen Anordnung läßt sich der Flüssigkeitsspiegel in der Vorrichtung sehr genau einstellen, und zwar insbesondere dann, wenn den einzelnen Überlauföffnungen jeweils gesonderte und gesondert einstellbare Abdeckungen zugeordnet sind. Diese Abdeckungen können als mit Rechtecköffnungen versehene Schieber ausgebildet sein, die mit Handgriffen versehen und in senkrechten Führungen verschiebbar sind.

Die Einstellung der Abdeckungen und damit die Höhe des Flüssigkeitsspiegels läßt sich automatisieren, wenn ein Schwimmerschalter vorgesehen ist, der einen Antrieb der Abdeckungen steuert.

Zweckmäßigerweise münden die Überlauföffnungen in einen gemeinsamen Sammelbehälter, in welchem das abgeschiedene Öl aufgefangen wird und auf diese Weise einer Wiederverwendung zugeführt werden kann.

Bei einer weiteren Anordnung zur Einstellung des Wasserspiegels steht die Austrittsöffnung des Behälters mit einem Rohr in Schwanenhalsform mit einem senkrechten Abschnitt und einem daran anschließenden oberen Krümmer in Verbindung, wobei der Krümmer teleskopartig gegenüber dem senkrechten Abschnitt des Rohres verstellbar ist. Durch die Höhenverstellbarkeit des Krümmers im Millimeterbereich läßt sich damit nicht nur der Flüssigkeitsspiegel in der Vorrichtung verändern, sondern auch die Durchsatzmenge. Wird nämlich die untere Innenfläche des Krümmers unter dem Flüssigkeitsspiegel abgesenkt, so kann mehr Flüssigkeit bzw. Wasser abfließen, was entweder bei geringer Nachförderung zu einer Absenkung des Flüssigkeitsspiegels in der Vorrichtung führt oder bei einem Ausgleich der zusätzlich abfließenden Menge durch den Nachförderer zu einem größeren Durchsatz.

Als zweckmäßig hat sich ein Behälter erwiesen, der einen Inhalt von etwa 2 m³ hat, wobei eine Durchsatzmenge von 2.000 l/h in Betracht kommt. Dies bedeutet, daß die Strömung durch die Vorrichtung etwa eine Stunde dauert. Das zu reinigende Wasser läuft normalerweise kontinuierlich durch den Behälter. Bei schnellerem Durchlauf sind bis zu 8.000 l/h möglich.

Die erfindungsgemäße Anordnung kann daher in besonders vorteilhafter Weise relativ klein ausgelegt werden und hat dennoch einen guten Wirkungsgrad. Die geringe Größe der Anordnung ermöglicht es insbesondere, die Vorrichtung bewegbar zu machen, so daß sie durch Fahrzeuge an Ort und Stelle transportiert werden kann. Dies hat den besonders großen Vorteil, daß die notwendigen Transportwege der bekannten Anordnung in Fortfall kommen, weil mit der erfindungsgemäßen Anordnung vor Ort das Wasser entnommen und in gereinigtem Zustand dem Gewässer wieder zugeführt werden kann.

Der Behälter kann zur Verringerung von Wasserwirbeln zumindest im Bereich der Zulauföffnung mit abgeschrägten senkrechten Seitenkanten versehen sein.

Die Pumpe muß so ausgelegt sein, daß das Öl möglichst nicht verwirbelt wird, d.h. in dem zu reinigenden Wasser oder mit diesem eine Emulsion bildet. Deswegen kann es zweckmäßig sein, zur Förderung des zu reinigenden Wassers eine Drehkolbenpumpe zu verwenden.

Mit der erfindungsgemäßen Anordnung lassen sich in der beschriebenen Weise mit einem einzigen Durchlauf Ölanteile von bis zu 5 % so weit abscheiden, daß im gereinigten Wasser nur noch Ölanteile im Promillebereich vorliegen. Versuche haben ergeben, daß nach einem Durchlauf im gereinigten Wasser nur noch 0,3 bis 0,7 mg Kohlenstoff pro Liter vorhanden waren.

Die Erfindung wird im folgenden anhand eines Ausführungsbeispieles in der Zeichnung näher erläutert.
- Fig. 1: zeigt in schematischer Darstellung eine Ausführungsform der erfindungsgemäßen Vorrichtung.
- Fig. 2: zeigt die Vorrichtung nach Fig. 1 in Ansicht im einzelnen.
- Fig. 3: ist der Schnitt III-III nach Fig. 2.
- Fig. 4: ist die Draufsicht auf die Vorrichtung nach Fig. 2.

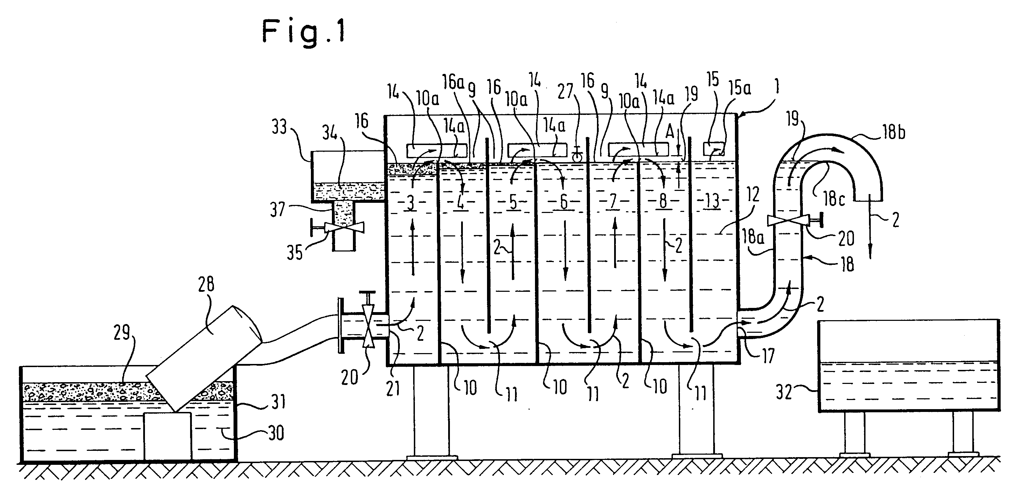

Gemäß Fig. 1 ist ein Behälter 1 vorgesehen, der mit mehreren in Strömungsrichtung 2 hintereinander geschalteten Kammern 3 bis 8 versehen ist, wobei jeweils zwei aufeinanderfolgende Kammern 3 und 4, 5 und 6 und 7 und 8 paarweise miteinander in ihrem oberen Bereich 9 verbunden sind, da die Zwischenwände 10 zwischen den Kammern eines Paares ein Überströmen des zu reinigenden Wassers in die jeweils nachfolgende Kammer gestatten. Die jeweils zweite Kammer 4 und 6 eines Kammerpaares ist in ihrem unteren Bereich bei 11 mit der folgenden Kammer des nächsten Paares verbunden, wobei die Kammer 8 des letzten Kammerpaares mit einer Einzelkammer 13 in Verbindung steht.

Die Strömung 2 durch die Kammern ist also mäanderförmig, wobei das zu reinigende Wasser jeweils immer von oben nach unten und umgekehrt in Pfeilrichtung geführt wird.

In den oberen Bereichen 9 der Kammerpaare 3 bis 8 bzw. der Einzelkammer 13 sind rechteckige Überlauföffnungen 14 und 15 vorgesehen, die dem Austritt des abgeschiedenen Öles dienen. Damit das abgeschiedene Öl auch austreten kann, liegen die Unterkanten 14a und 15a der Überlauföffnungen 14 und 15 im selben Höhenbereich wie die Oberkanten 10a der Zwischenwandungen 10 eines Kammerpaares.

Im unteren Bereich der letzten Einzelkammer 13 ist eine Austrittsöffnung 17 angeordnet, an welche ein Rohr 18 in Schwanenhalsform anschließt, welches aus einem senkrechten Abschnitt 18a und einem Krümmer 18b besteht. Der Krümmer 18b ist teleskopartig gegenüber dem senkrechten Abschnitt 18a des Rohres 18 verstellbar. Durch die Höhenverstellbarkeit des Krümmers läßt sich der Flüssigkeitsspiegel 19 in den Kammern und damit auch in dem schwanenhalsförmigen Rohr 18 einstellen. Gleichzeitig läßt sieh mit dieser Einstellbarkeit die Durchsatzmenge verändern.

Der senkrechte Abschnitt 18a des Rohres 18 ist mit einem Absperrschieber 20 versehen, ebenso wie eine im unteren Bereich der ersten Kammer 3 angeordnete Zulauföffnung 21.

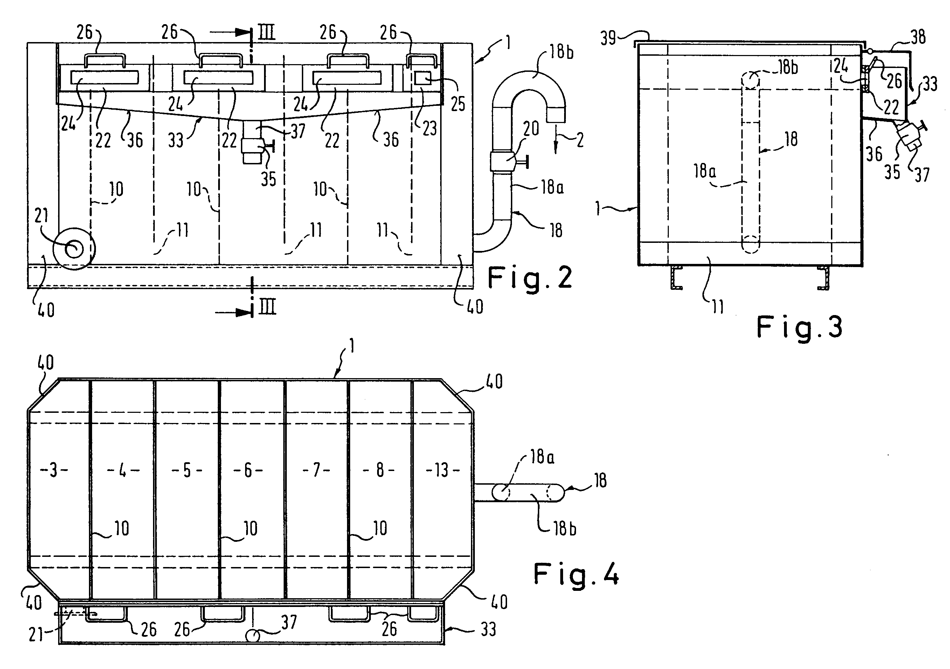

Zur vertikalen Einstellung der Unterkanten 14a der Überlauföffnungen 14 sind den einzelnen Überlauföffnungen Abdeckungen 22 und 23 zugeordnet (vgl. Fig. 2), die ebenfalls mit Rechtecköffnungen 24 und 25 versehen sind und in senkrechten Führungen bewegbar sind. Hierzu können die Abdeckungen 22 und 23 mit Handgriffen 26 versehen sein (vgl. Fig. 2).

Die Verstellung der Abdeckungen 22 und 23 kann, wie in Fig. 2 dargestellt, für jede Überlauföffnung einzeln erfolgen, es ist aber auch möglich, alle Abdeckungen an eine Traverse oder dergleichen anzuschließen und gemeinsam zu verstellen. Die Verstellung einzelner oder aller Abdeckungen kann auch automatisiert werden, indem den Abdeckungen ein Antrieb in Form einer Spindel oder dergleichen zugeordnet ist und dieser Antrieb oder diese Antriebe durch einen Schwimmerschalter 27 (vgl. Fig. 1) gesteuert werden. Mit einem solchen Schwimmerschalter läßt sich der jeweilige Abstand der Unterkanten 14a der Überlauföffnungen 14 vorgeben und genau einhalten.

In Fig. 1 ist ferner noch schematisch eine Kreiselpumpe 28 oder eine Drehkolbenpumpe dargestellt, die das zu reinigende und von einem Ölschaum 29 bedeckte Wasser 30 aus einem schematisch angedeuteten Gewässer, wie einem Fluß, einem See oder dergleichen, welches bei der Darstellung nach Fig. 1 als Behälter 31 wiedergegeben ist, fördert. Das gereinigte Wasser wird gemäß der Darstellung nach Fig. 1 einem Auffangbehälter 32 zugeführt, der ebenfalls das zu reinigende Gewässer selbst sein kann.

Der Abstand A zwischen der Unterkante 14a der jeweiligen Überlauföffnung und der Oberkante 10a der Zwischenwand 10 ist in Abhängigkeit von den gegebenen Verhältnissen einstellbar. Wie ersichtlich, wird umso weniger Öl ausgefördert, je größer dieser Abstand ist. Andererseits führt ein zu geringer Abstand aber auch dazu, daß zusammen mit dem auszufördernden Öl auch verhältnismäßig viel Wasser durch die Überlauföffnung 14 abfließt. Zwar ist es theoretisch möglich, diesen Abstand auch negativ zu machen, d.h. die Unterkanten 14a der Überlauföffnungen 14 unterhalb der Oberkanten 10a der Zwischenwände 10 anzuordnen, jedoch hat es sich als zweckmäßig herausgestellt, einen positiven Abstand von etwa 20 mm zu wählen.

Die Überlauföffnungen münden gemeinsam in einen Sammelbehälter 33, in welchem das abgesehiedene Öl 34 aufgefangen wird. Der Sammelbehälter 33 ist auf seiner Unterseite mit einem Absperrschieber 35 versehen, um das Öl ablassen zu können.

Fig. 2 zeigt den Behälter 1 der Vorrichtung nach Fig. 1 in Ansicht und läßt insbesondere eine Ausführungsform des Ölsammelbehälters 33 erkennen, bei dem geneigt verlaufende Bodenwandungen 36 das Öl zur Mitte des Behälters hinführen, wo ein Ablaufstutzen 37 mit dem Schieber 35 angeschlossen ist.

Wie aus Fig. 3 hervorgeht, kann der Stutzen 37 geneigt angeordnet sein, wobei die Bodenwandungen 36 zusätzlich zur Neigung gemäß Fig. 2 auch noch eine Neigung nach unten außen weg vom Behälter 1 haben. Da der Sammelbehälter 33 nach oben offen sein kann, ist er zweckmäßigerweise mit einem klappbaren Deckel 38 versehen. Ein weiterer Deckel 39 kann den gesamten Behälter 1 abdecken.

Fig. 4 ist die Draufsicht auf den Behälter 1 und läßt erkennen, daß der Behälter 1 zur Verringerung von Wasserwirbeln mit abgeschrägten senkrechten Seitenkanten 40 versehen ist.

Die Wirkungsweise der beschriebenen Anordnung ist folgende:
Das mittels der Kreiselpumpe 28 dem zu reinigenden Gewässer 30 entnommene und in dem Behälter 1 hineingeförderte ölbelastete Wasser gelangt zunächst in die Kammer 3, in welcher sich eine Ölschicht 16 nach oben absetzt. Aufgrund des Förderdruckes und einer gewissen Fördergeschwindigkeit wird das Öl über die Unterkante 14a der dortigen Überlauföffnung 14 gedrückt und fließt teilweise durch die Überlauföffnung 14 in den Sammelbehälter 33. Das restliche Öl 16a gelangt mit dem über die Oberkante 10a der Zwischenwand 10 fließenden Wasser in die nächste Kammer 4. Es findet also gleichzeitig ein Übertreten der oberen ölbehafteten Wasserschicht über die Unterkante 14a der Überlauföffnung 14 und eine Strömung einer weiter unten liegenden Schicht über die Oberkante 10a der Zwischenwand 10 statt.

Dieser Vorgang wiederholt sich dann in den Kammern 5 und 6 bzw. 7 und 8.

In der letzten Kammer 13 wird dann durch die Überlauföffnung 15 das restliche Öl abgefördert, sofern in dem zu reinigenden Wasser noch ein Ölanteil verblieben ist.

Zur Einstellung des Flüssigkeitsspiegels im Behälter und damit zur Einstellung einer optimalen Abscheidung können entweder die Abdeckungen 22 und 23 (vgl. Fig. 2) einzeln oder gemeinsam verstellt werden, was auch durch den Schwimmerschalter 27 geschehen kann, oder der Krümmer 18b des Schwanenhalsrohres 18 wird relativ zum senkrechten Abschnitt 18a dieses Rohres in seiner Höhe verstellt. Letzteres gestattet es, in der beschriebenen Weise auch die Durchsatzmenge zu verändern.

## Patentansprüche

1. Vorrichtung zur Durchflußabscheidung von Öl aus Wasser, die aus einem Behälter (1) mit Ein- und Auslaß (17,21) und mit von oben und von unten in das zu reinigende Wasser hineinragenden Zwischenwänden (10) besteht, so daß jeweils zwei aufeinanderfolgende, sich über das gesamte Flüssigkeitsniveau erstreckende Kammern (3,4,5,6,7,8) gebildet werden, die paarweise in ihren oberen Bereichen (9) miteinander verbunden, im übrigen aber durch die Zwischenwände (10) voneinander getrennt sind, wobei die jeweils zweite Kammer (4,6) in ihrem unteren Bereich (11) mit der folgenden Kammer des nächsten Paares (5,7) verbunden ist, und so daß sich eine von oben nach unten und umgekehrt verlaufende mäanderartige Strömung durch den Behälter (1) ergibt, wobei im oberen Bereich des Behälters (1) Überlauföffnungen (14) zum Austritt des abgeschiedenen Öles derart vorgesehen sind, daß in der vertikalen Verlängerung jeder von unten nach oben in das Wasser hineinreichenden Zwischenwand (10) eine Überlauföffnung (14) liegt, und wobei die Überlauföffnungen (14,15) die Form eines liegenden Rechteckes haben und die Unterkanten (14a, 15a) der Überlauföffnungen (14,15) durch Abdeckungen (22, 23) vertikal verschiebbar sind, dadurch gekennzeichnet, daß die Oberkanten (10a) der von unten nach oben in das Wasser hineinragenden Zwischenwände (10) in einem Abstand von 20 mm oder weniger unterhalb der Unterkanten (14a,15a) der Überlauföffnungen (14,15) angeordnet sind, und daß die Verschiebung der Abdeckungen mittels eines mechanischen Antriebes erfolgt, durch welchen die Einstellage der Abdeckungen kontinuierlich veränderbar ist.

2. Vorrichtung nach Anspruch 1, dadurch gekennzeichnet, daß das gereinigte Wasser im unteren Bereich (11) der letzten Kammer (13) ausförderbar ist.

3. Vorrichtung nach Anspruch 1, dadurch gekennzeichnet, daß das Rechteck eine Länge von etwa 20 bis 30 cm und eine Höhe von 2 bis 5 cm hat.

4. Vorrichtung nach Anspruch 1, dadurch gekennzeichnet, daß die Unterkanten (14a,15a) der Überlauföffnungen mit einer gemeinsamen von unten gegen die Überlauföffnungen (14,15) schiebbaren Abdeckung versehen sind.

5. Vorrichtung nach Anspruch 1, dadurch gekennzeichnet, daß den einzelnen Überlauföffnungen (14,15) jeweils gesonderte und gesondert einstellbare Abdeckungen (22, 23) zugeordnet sind.

6. Vorrichtung nach Anspruch 1, dadurch gekennzeichnet, daß die Abdeckungen (22, 23) als mit Rechtecköffnungen (24,25) versehene Schieber ausgebildet sind.

7. Vorrichtung nach Anspruch 6, dadurch gekennzeichnet, daß die Abdeckungen (22, 23) mit Handgriffen (26) versehen und in senkrechten Führungen verschiebbar sind.

8. Vorrichtung nach einem der Ansprüche 1 bis 7, dadurch gekennzeichnet, daß wenigstens ein Schwimmerschalter (27) vorgesehen ist, der wenigstens einen der Antriebe der Abdeckungen (22,23) steuert.

9. Vorrichtung nach einem der vorhergehenden Ansprüche, dadurch gekennzeichnet, daß die Überlauföffnungen (14, 15) in einen gemeinsamen Sammelbehälter (33) münden, in dem das abgeschiedene Öl aufgefangen wird.

10. Vorrichtung nach einem der vorhergehenden Ansprüche, dadurch gekennzeichnet, daß an die Austrittsöffnung (17) des Behälters (1) ein Rohr (18) in Schwanenhalsform mit einem senkrechten Abschnitt (18a) und einem daran anschließenden oberen Krümmer (18b) anschließt, wobei der Krümmer (18b) teleskopartig gegenüber dem senkrechten Abschnitt (18a) des Rohres (18) verstellbar ist.

11. Vorrichtung nach einem der vorhergehenden Ansprüche, dadurch gekennzeichnet, daß der Behälter (1) einen Inhalt von etwa 2 m³ hat.

12. Vorrichtung nach einem der vorhergehenden Ansprüche, dadurch gekennzeichnet, daß die Vorrichtung transportabel ausgestaltet ist.

## Claims

1. Device for through-flow separation of oil from water, comprising a container (1) with inlet and outlet (17, 21) and with intermediate walls (10) which extend from the top and from the bottom into the water to be purified, so that two respectively adjacent chambers (3, 4, 5, 6, 7, 8) which extend over the entire liquid level are established, which are interconnected in pairs in their upper regions (9) but otherwise separated from each other by the intermediate walls (10), and that a respective second chamber (4, 6) is in its bottom region (11) connected to the adjacent chamber of the next pair (5, 7), and that thus a meandering flow from the top to the bottom and back through the container (1) is established, and that overflow openings (14) for discharging separated oil are provided in the top region of the container (1) in such a manner that in the perpendicular extension of each intermediate wall (10) which extends from the bottom to the top is placed an overflow opening (14) and that the overflow openings (14, 15) have the shape of a lying rectangle and the bottom edges (14a, 15a) of the overflow openings (14, 15) are perpendicularly displaceable by covers (22, 23), **characterised in that** the top edges (10a) of the intermediate walls (10) which extend from the bottom towards the top into the water are arranged at a distance of 20 mm or less below the bottom edges (14a, 15a) of the overflow openings (14, 15), and that the displacement of the covers is carried out by means of a mechanical drive by means of which the position of the covers is continuously changed.

2. Device according to claim 1, **characterised in that** the purified water is dischared in the bottom area (11) of the last chamber (13).

3. Device according to claim 1, **characterised in that** the rectangle has a length Of approximately between 20 and 30 cm and a height of between 2 and 5 cm.

4. Device according to claim 1, **characterised in that** the bottom edges (14a, 15a) of the overflow openings are provided with a joint cover which is displaceable from the bottom towards the overflow openings (14, 15).

5. Device according to claim 1, **characterised in that** the individual overflow openings (14, 15) are associated with respective separate and separately adjustable covers (22, 23).

6. Device according to claim 1, **charactersied in that** the covers (22, 23) are arranged to be slides with rectangular openings (24, 25).

7. Device according to claim 6, **characterised in that** the covers (22, 23) are fitted with handles (26) and displaceable in perpendicular guides.

8. Device according to one of claims 1 to 7, **characterised in that** at least one floater switch (27) is provided which controls at least one of the drives for the covers (22, 23).

9. Device according to one of the above claims, **characterised in that** the overflow openings (14, 15) terminate in a joint collecting vessel (33) where separated oil is collected.

10. Device according to one of the above claims, **characterised in that** the outlet opening (17) of the container (1) connects to a goose-neck pipe (18) with a perpendicular section (18a) and a thereto connected top bend (18b), and that the bend (18b) is telescopically adjustable relative to the perpendicular section (18a) of the pipe (18).

11. Device according to one of the above claims, **characterised in that** the container (1) has a capacity of approximately 2 m³.

12. Device according to one of the above claims, **characterised in that** the device is transportable.

## Revendications

1. Dispositif de séparation d'écoulement d'huile de l'eau, composé d'un récipient (1), comportant une admission et une évacuation (17, 21), avec des parois intermédiaires (10), pénétrant par le haut et par le bas dans l'eau à épurer, de sorte que, chaque fois deux chambres (3, 4, 5, 6, 7, 8) successives s'étendant sur la totalité du niveau de liquide, soient constituées et reliées l'une à l'autre, par couples, dans leur zones supérieures (9), mais pour le reste, séparées les unes des autres par les parois intermédiaires (10), chaque deuxième chambre (4, 6) étant reliée, dans sa zone inférieure (11), à la chambre suivante du couple (5, 7) suivant de sorte qu'en résulte à travers le récipient (1) un écoulement en méandre, évoluant de haut en bas et inversement, des ouvertures de déversement (14), destinées à la sortie de l'huile ayant été séparée, étant prévues dans la zone supérieure du récipient, de manière qu'une ouverture de déversement (14) se trouve dans le prolongement vertical de chaque paroi intermédiaire (10) pénétrant de bas en haut dans l'eau, et les ouvertures de déversement (14, 15) ont la forme d'un rectangle horizontal et les arêtes inférieures (14a, 15a) des ouvertures de déversement (14, 15) étant déplaçables verticalement au moyen de recouvrement (22, 23), caractérisé en ce que les arêtes supérieures (10a) des parois intermédiaires (10) pénétrant de bas en haut dans l'eau sont disposées suivant un espacement de 20 mm ou moins, au-dessous des arêtes inférieures (14a, 15a) des ouvertures de déversement (14, 15), et en ce que le déplacement des recouvrements s'effectue au moyen d'un entraînement mécanique, au moyen duquel la position de réglage des recouvrements est réglable de façon continue.

2. Dispositif selon la revendication 1, caractérisé en ce que l'eau épurée peut être évacuée dans la zone inférieure (11) de la dernière chambre (13).

3. Dispositif selon la revendication 1, caractérisé en ce que le rectangle a une longueur d'à peu près 20 à 30 cm et une hauteur de 2 à 5 cm.

4. Dispositif selon la revendication 1, caractérisé en ce que les arêtes inférieures (14a, 15a) des ouvertures de déversement sont pourvues d'un recouvrement commun déplaçable depuis le bas, contre les ouvertures de déversement (14, 15).

5. Dispositif selon la revendication 1, caractérisé en ce que des recouvrements (22, 23) séparés individuellement et réglables séparément sont associés aux différentes ouvertures de déversement (14, 15).

6. Dispositif selon la revendication 1, caractérisé en ce que les recouvrements (22, 23) sont réalisés sous forme de registres pourvus d'ouvertures rectangulaires (24, 25).

7. Dispositif selon la revendication 6, caractérisé en ce que les recouvrements (22, 23) sont pourvus de poignées (26) et déplaçables dans des guidages verticaux.

8. Dispositif selon l'une des revendications 1 à 7, caractérisé en ce qu'au moins un interrupteur à flotteur (27) est prévu et commande au moins l'un des entraînements des recouvrements (22, 23).

9. Dispositif selon l'une des revendications précédentes caractérisé en ce que les ouvertures de déversement (14, 15) débouchent dans un récipient collecteur (33) commun, dans lequel l'huile séparée est captée.

10. Dispositif selon l'une des revendications précédentes, caractérisé en ce qu'un tube (18), ayant une forme en col de cygne, avec une section verticale (18a) et un coude supérieur (18b) s'y raccordant, se raccorde à l'ouverture de sortie (17) du récipient (1), le coude (18b) étant réglable télescopiquement par rapport à la section verticale (18a) du tube (18).

11. Dispositif selon l'une des revendications précédentes, caractérisé en ce que le récipient (1) a une contenance d'à peu près 2 m³.

12. Dispositif selon l'une des revendications précédentes, caractérisé en ce que le dispositif est constitué pour être transportable.
